# EUROPÄISCHE PATENTSCHRIFT

(11) **EP 3 493 334 B1**
(45) Veröffentlichungstag und Bekanntmachung des Hinweises auf die Patenterteilung: **31.03.2021**
(21) Anmeldenummer: 18209157.9
(22) Anmeldetag: 29.11.2018
(51) Int. Cl.: H01R 13/629

(54) **BATTERIESTECKER-BETÄTIGUNGSSYSTEM**
BATTERY CONNECTOR ACTUATION SYSTEM
SYSTÈME D'ACTIONNEMENT DE CONNECTEUR DE BATTERIE

(30) Priorität: 30.11.2017 DE 102017221574
(43) Veröffentlichungstag der Anmeldung: 05.06.2019
(73) Patentinhaber: Jungheinrich Aktiengesellschaft, 22047 Hamburg (DE)
(72) Erfinder: BERNAU, Stefan, 85368 Moosburg (DE); REICHENBACH, Falk, 85748 Garching (DE); HUTTER, Michael, 85406 Zolling (DE)
(74) Vertreter: Weickmann & Weickmann PartmbB

(56) Entgegenhaltungen:
- DE-A1-102014 101 469
- FR-A1- 2 810 802
- JP-A- 2002 260 757
- US-A1- 2013 108 357

## Beschreibung

Die vorliegende Erfindung betrifft ein Batteriestecker-Betätigungssystem zum Herstellen und Lösen einer Steckverbindung wenigstens einer batterieseitigen Steckereinheit und wenigstens einer fahrzeugseitigen Steckereinheit in einem Fahrzeug, insbesondere einem Flurförderzeug, umfassend einen Grundkörper, eine an dem Grundkörper in einer Einsteck- und Aussteckrichtung verlagerbar geführte erste Aufnahmeeinheit für die wenigstens eine batterieseitige Steckereinheit, eine dem Grundkörper fest zugeordnete zweite Aufnahmeeinheit für die wenigstens eine fahrzeugseitige Steckereinheit, einen schwenkbar an dem Grundkörper angelenkten Betätigungshebel und wenigstens ein Mitnehmerelement, welches einerseits an dem Betätigungshebel angelenkt ist und andererseits verlagerbar an dem Grundkörper geführt ist, wobei die erste Aufnahmeeinheit und das Mitnehmerelement derart eingerichtet sind, dass bei einem Schwenken des Betätigungshebels an einem Kraftübertragungspunkt eine Kraft von dem Mitnehmerelement auf die erste Aufnahmeeinheit übertragen wird, welche eine Verlagerung der ersten Aufnahmeeinheit in die Einsteck- oder Aussteckrichtung bewegt.

Im Zusammenhang mit dem Siegeszug von elektrisch betriebenen Fahrzeugen sind zur Vermeidung von Stillstandzeiten beim Aufladen von fest in derartigen Fahrzeugen verbauten Akkumulatoren in letzter Zeit Fahrzeuge vorgeschlagen worden, die austauschbare Akkumulatoren, sogenannte Batterieblöcke, umfassen, die extern der Fahrzeuge geladen werden können und nach einem Wechselvorgang leere Batterieblöcke in den Fahrzeugen ersetzen können.

Um ausreichende elektrische Leistung insbesondere für den Betrieb von Traktionsmotoren in derartigen Fahrzeugen von dem Batterieblock bereitstellen zu können, sind relativ große Kabelquerschnitte und Steckereinheiten nötig, mittels derer die Verbindung zwischen den fahrzeugseitig verbauten Komponenten des elektrischen Antriebs, insbesondere den angesprochenen Traktionsmotoren, und dem Batterieblock hergestellt werden kann.

Um ferner sicherzustellen, dass diese Steckverbindungen mit einer ausreichenden Steckkraft zusammengefügt werden, sind Batteriestecker-Betätigungssysteme vorgeschlagen worden, in denen eine fixierte Steckereinheit und eine lose Steckereinheit unter Ausnutzung einer Hebelwirkung zusammengefügt werden, indem ein schwenkend gelagerter Betätigungshebel umgelegt wird. Ein derartiges Batteriestecker-Betätigungssystem ist beispielsweise aus der DE 10 2014 101 469 A1 bekannt. In dem dort beschriebenen System wird die Schwenkbewegung des Betätigungshebels derart umgesetzt, dass die fahrzeug- und batterieseitigen Steckerelemente axial zusammengeführt werden und die nicht unerhebliche mechanische Reibung zwischen den Kontaktelementen der Steckereinheiten durch die mittels des Hebels verstärkte Handkraft des Bedieners überwunden wird.

Weiterhin ist aus der US 2013/0108357 A1 ein gattungsgemäßes Batteriestecker-Betätigungssystem mit einem Grundkörper, einer an diesem verlagerbar geführten ersten Aufnahmeeinheit, einer zweiten Aufnahmeeinheit, einem an dem Grundkörper angelenkten Betätigungshebel und wenigstens einem Mitnehmerelement bekannt, in welcher ein Schwenken des Betätigungshebels eine Verlagerung der ersten Aufnahmeeinheit in einer Einsteck- oder Aussteckrichtung bewirkt. Der Vollständigkeit halber sei ferner auf die weiteren Druckschriften FR 2 810 802 A1 und JP 202 260 757 A verwiesen.

Wenngleich die angesprochenen bekannten Batteriestecker-Betätigungssysteme durchaus praktikabel sind, so zeigen sie im täglichen Betrieb einige Nachteile, die durch die vorliegende Erfindung ausgeräumt werden sollen. Insbesondere neigt das aus der DE 10 2014 101 469 A1 bekannte System aufgrund seiner ungünstigen Krafteinleitung bzw. ungünsti gen Kraftübertragung von dem schwenkbaren Betätigungshebel auf die batterieseitige Steckereinheit zu einem Verkanten der Steckereinheit durch den sogenannten Schubladeneffekt. Insbesondere eignet sich das angesprochene System auch nicht für eine gleichzeitige Verwendung mit mehreren Steckerpaaren oder auch nur verschiedene Steckertypen. Somit muss beim Einsatz mehrerer Steckertypen oder dem gleichzeitigen Einsatz mehrerer Steckerpaare eine aufwändige Umkonstruktion bzw. ein Umbau des bekannten Batteriestecker-Betätigungssystems vorgenommen werden.

Es ist daher die Aufgabe der vorliegenden Erfindung, ein gattungsgemäßes Batteriestecker-Betätigungssystem bereitzustellen, das die genannten Probleme des Stands der Technik behebt und insbesondere das Problem des Verkantens durch den Schubladeneffekt ausräumt, sowie für einen Einsatz mit mehreren Steckerpaaren oder verschiedenen Typen von Steckerpaaren ohne Umbaumaßnahmen geeignet ist.

Hierzu ist gemäß einem ersten Aspekt der vorliegenden Erfindung der Kraftübertragungspunkt zwischen dem Mitnehmerelement und der ersten Aufnahmeeinheit in Einsteckrichtung der batterieseitigen Steckereinheit hinter dem Steckverbindungspunkt der beiden Steckereinheiten angeordnet. Auf diese Weise wird die batterieseitige Steckereinheit nicht mehr auf die fahrzeugseitige Steckereinheit aufgeschoben, wie dies in der Vorrichtung aus dem oben beschriebenen Stand der Technik der Fall ist, sondern in Richtung der zweiten Aufnahmeeinheit und damit der fahrzeugseitigen Steckereinheit gezogen. Dieses Ziehen der batterieseitigen Steckereinheit ermöglicht eine Selbstzentrierung des Steckerpaars, so dass der oben beschriebene Schubladeneffekt und das durch ihn hervorgerufene Verkanten bauartbedingt von vornherein ausgeschlossen sind.

Weiterhin erlaubt die erfindungsgemäße Konstruktion durch das Heranziehen der batterieseitigen Steckereinheit zu der fahrzeugseitigen Steckereinheit ein initiales Einstecken der beiden Einheiten, wodurch das Ineinanderfügen der beiden Steckereinheiten erleichtert wird. Somit kann auf bauliche Maßnahmen wie Kulissenführungen verzichtet werden, die häufig keine ausreichend hohe Führungsgenauigkeit aufweisen und somit bei schlechter Ausführung der Steckereinheiten diese nicht passend zueinander bewegen können. Das manuelle initiale Vorstecken der Steckerpaare hingegen ist leichter durch einen Bediener umzusetzen und erhöht somit die Prozesssicherheit beim Betätigen des erfindungsgemäßen Systems.

Weiterhin können die erste und die zweite Aufnahmeeinheit jeweils dazu eingerichtet sein, wenigstens zwei Typen von Steckereinheiten aufnehmen zu können und/oder gleichzeitig wenigstens zwei Steckereinheiten aufnehmen zu können. Durch dieses erfindungsgemäße Merkmal wird ein flexibleres Batteriestecker-Betätigungssystem geschaffen, das es erlaubt, ohne konstruktive Änderungen an dem System verschiedene Stecker, beispielsweise mit unterschiedlichen Steckhüben, in gleicher Weise zu betätigen und/oder mehrere Steckerpaare in einem einzelnen Betätigungsvorgang zu verbinden oder zu trennen.

Hierzu kann in einer Ausführungsform das erfindungsgemäße Batteriestecker-Betätigungssystem derart ausgebildet sein, dass die erste und die zweite Aufnahmeeinheit jeweils wenigstens eine Gruppe von Löchern zur Aufnahme wenigstens einer Steckereinheit umfassen. Durch geeignete Anordnung dieser Löcher, beispielsweise entlang der Einsteck- und Aussteckrichtung des erfindungsgemäßen Systems, können insbesondere unterschiedliche Steckhübe von unterschiedlichen Typen von Steckerpaaren ausgeglichen werden. Weiterhin kann durch das Vorsehen mehrerer Gruppen von Löchern ein gattungsgemäßes System geschaffen werden, das das gleichzeitige Herstellen von Steckverbindungen von mehreren batterieseitigen Steckereinheiten mit mehreren fahrzeugseitigen Steckereinheiten ermöglicht, beispielsweise indem eine Mehrzahl der angesprochenen Gruppen von entlang der Einsteck- und Aussteckrichtung angeordneten Löchern nebeneinander vorgesehen werden.

Die Führung der ersten Aufnahmeeinheit an dem Grundkörper und/oder die Führung des wenigstens einen Mitnehmerelements an dem Grundkörper kann erfindungsgemäß mittel wenigstens eines Langlochs vorgesehen sein.

Alternativ könnten hierfür jedoch selbstverständlich auch Schienensysteme oder Ähnliches eingesetzt werden, wobei jedoch Langlöcher einerseits kostengünstig herzustellen sind und andererseits in der Regel niedrige Toleranzen aufweisen.

Weiterhin kann das erfindungsgemäße Batteriestecker-Betätigungssystem derart ausgebildet sein, dass die Anlenkachse des Betätigungshebels an dem Grundkörper in Einsteckrichtung der batterieseitigen Steckereinheit hinter dem Kraftübertragungspunkt zwischen dem Mitnehmerelement und der ersten Aufnahmeeinheit liegt. Auf diese Weise kann einerseits eine optimale Hebelwirkung und damit eine bestmögliche Kraftübertragung zwischen den an den Steckvorgängen beteiligten Komponenten sichergestellt werden und es kann andererseits eine kompakte Bauweise des erfindungsgemäßen Systems erzielt werden.

Weiterhin kann das erfindungsgemäße System derart ausgebildet sein, dass die erste Aufnahmeeinheit von dem Grundkörper lösbar ist, beispielsweise indem das für ihre Führung vorgesehene Langloch an dem Grundkörper an einer Seite offen ausgebildet ist. Auf diese Weise kann die erste Aufnahmeeinheit zur Herstellung der Verbindung mit der batterieseitigen Steckereinheit vollständig von dem Grundkörper entnommen werden, was die Handhabung des erfindungsgemäßen Systems vereinfacht. Selbstverständlich wäre jedoch auch denkbar, die erste Aufnahmeeinheit fest dem Grundkörper zuzuordnen, beispielsweise indem das zu ihrer Führung vorgesehene Langloch an dem Grundkörper geschlossen ausgebildet wird, dann müsste jedoch die Verbindung zwischen der ersten Aufnahmeeinheit und der batterieseitigen Steckereinheit in einem Zustand durchgeführt werden, in dem die erste Aufnahmeeinheit fest an dem Grundkörper angebracht ist, was unter Umständen zu einer komplizierteren Bedienung des erfindungsgemäßen Systems führen könnte, allerdings andererseits das Verlustrisiko einer lösbaren ersten Aufnahmeeinheit ausräumt.

Erfindungsgemäß weist die erste Aufnahmeeinheit an ihrer in Einsteckrichtung vorderen Seite wenigstens ein Hakenelement auf, welches dazu eingerichtet ist, mit einem Gegenelement des Mitnehmerelements in Eingriff zu treten, wobei der Eingriff lediglich in einem vorbestimmten Schwenkwinkelbereich des Betätigungshebels vorliegt. Hierbei bildet der Eingriffspunkt zwischen dem Hakenelement und dem Gegenelement den erfindungsgemäßen Kraftübertragungspunkt. Insbesondere in Ausführungsformen, in denen die erste Aufnahmeeinheit von dem Grundkörper lösbar ist, kann auf diese Weise eine Freigabe und eine Verriegelung der ersten Aufnahmeeinheit an dem Grundkörper erzielt werden, indem der Eingriff zwischen dem Hakenelement und dem Gegenelement nicht vorliegt, wenn die Steckverbindung zwischen den beiden Steckereinheiten gelöst ist. Demzufolge ist in einer solchen Ausführungsform dann bei geschlossener Steckverbindung zwischen den beiden Steckereinheiten auch die erste Aufnahmeeinheit mittels des Mitnehmerelements an dem Grundkörper verriegelt.

Um eine optimale Krafteinleitung des Betätigungshebels auf die Steckerpaare zu gewährleisten und Scherungen oder Verkantungen in dem erfindungsgemäßen System zu verhindern, kann es vorteilhaft sein, wenn das System bezüglich einer in Einsteck- und Aussteckrichtung verlaufenden Mittelebene im Wesentlichen symmetrisch ausgebildet ist. Dies führt zwangsläufig dazu, dass einige der bereits angesprochenen Komponenten in zweifacher Ausführung beiderseits dieser Mittelebene vorliegen müssen, beispielsweise je nach Ausführungsform die genannten Langlöcher und Haken- bzw. Gegenelemente.

In einer vorteilhaften Weiterbildung kann das erfindungsgemäße Batteriestecker-Betätigungssystem derart ausgebildet sein, dass die Schwenkachse des Betätigungshebels an dem Grundkörper, die Anlenkachse des Mitnehmerelements an dem Betätigungshebel und die Führung des Mitnehmerelements an dem Grundkörper dazu eingerichtet sind, derart zusammenzuwirken, dass eine Verlagerung des Mitnehmerelements in seiner Führung bei einem Schwenken des Betätigungshebels erst nach Überschreiten eines Totbereichs einsetzt. Dieses Vorsehen eines Totbereichs wirkt als zusätzliche Sicherung, insbesondere im eingesteckten Zustand der beiden Steckereinheiten, da hierdurch ein selbständiges Öffnen des Hebels auch ohne aufwändigen Sicherungsmechanismus verhindert wird.

Ferner kann das erfindungsgemäße Batteriestecker-Betätigungssystem ein Anschlagelement zur Begrenzung der Schwenkbewegung des Betätigungshebels in der Einsteckrichtung umfassen, um einen definierten Bewegungsweg des Betätigungshebels und damit eine hierdurch ebenfalls definierte Baugröße des Systems festzulegen.

Alternativ oder zusätzlich kann das erfindungsgemäße System ferner ein Verriegelungselement zum Festsetzen des Betätigungshebels in einer festgelegten Endposition in der Aussteckrichtung umfassen, wobei die Endposition beispielsweise durch die Führung des Mitnehmerelements an dem Grundkörper festgelegt sein kann. Dieses Verriegelungselement kann beispielsweise mit einem Vorbelastmechanismus vorgesehen werden, der den Betätigungshebel in der genannten festgelegten Endposition in die Aussteckrichtung vorbelastet, um auch hier ein versehentliches Umlegen des Hebels beispielsweise in einen Zustand zu verhindern, in dem die batterieseitige Steckereinheit gerade entfernt ist und das Batteriestecker-Betätigungssystem in einem Bereitschaftszustand ist.

Zuletzt betrifft die vorliegende Erfindung ein Fahrzeug, insbesondere ein Flurförderzeug, umfassend ein erfindungsgemäßes Batteriestecker-Betätigungssystem. Hierbei kann es sich insbesondere um elektrisch betriebene Fahrzeuge, wie beispielsweise elektrisch betriebene Gabelstapler, handeln. Selbstverständlich könnte das erfindungsgemäße System jedoch auch in Fahrzeugen zum Einsatz kommen, in denen die hierdurch anzuschließende Batterie andere Aufgaben als den Antrieb des Fahrzeugs übernimmt.

Weitere Merkmale und Vorteile der vorliegenden Erfindung werden aus der nachfolgenden Beschreibung einer Ausführungsform deutlich, wenn diese zusammen mit den beiliegenden Figuren betrachtet wird. Diese zeigen im Einzelnen:
Figur 1 eine schräge Draufsicht auf ein erfindungsgemäßes Batteriestecker-Betätigungssystem;
Figuren 2a bis 2c das System aus Figur 1 aus einer Seitenansicht in drei Zuständen während eines Einsteckvorgangs; und
Figuren 3a bis 3d eine schematische Darstellung der Kinematik des Systems aus der Figur 1 während eines Aussteckvorgangs.

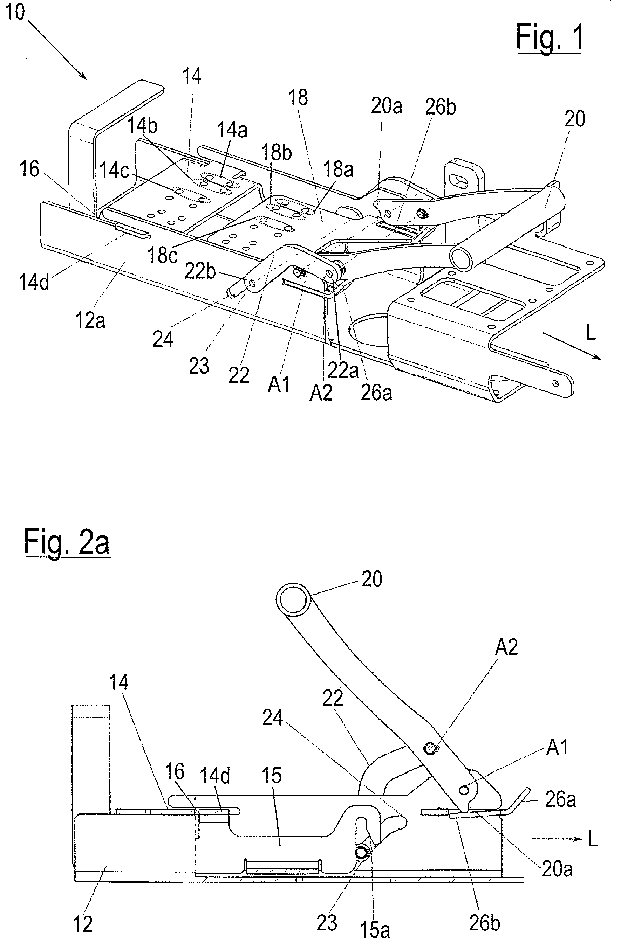

In Figur 1 ist eine Ausführungsform eines erfindungsgemäßen Batteriestecker-Betätigungssystems in einer schrägen Draufsicht gezeigt und ganz allgemein mit dem Bezugszeichen 10 bezeichnet. Das System umfasst einen beispielsweise aus Stahlblech gebildeten Grundkörper 12 mit einem Paar von Seitenwänden 12a, die symmetrisch um eine Ebene parallel zur Längsachse L des Systems 10 angeordnet sind. Diese Längsachse L entspricht ferner einer Einsteckrichtung einer nicht gezeigten batterieseitigen Steckereinheit in eine ebenfalls nicht gezeigte fahrzeugseitige Steckereinheit während eines Einsteckvorgangs, der mittels des gezeigten Systems 10 durchgeführt werden kann.

Hierzu ist die batterieseitige Steckereinheit mit einer ersten Aufnahmeeinheit 14 verbindbar, die auf beiden Seiten der Längsachse L des Grundkörpers 12 mit jeweiligen Vorsprüngen 14d in einem Paar von Langlöchern 16 in den beiden Seitenwänden 12a des Grundkörpers 12 geführt ist. Wie in Fig. 1 zu erkennen ist, sind die Langlöcher 16 an ihrem Ende entgegen der Einsteckrichtung L offen, so dass die erste Aufnahmeeinheit 14 aus den Langlöchern 16 entnehmbar und somit vom Grundkörper 12 lösbar ausgebildet ist.

Zur Befestigung der batterieseitigen Steckereinheit an der ersten Aufnahmeeinheit 14 sind an dieser mehrere Gruppe von Löchern 14a bis 14c vorgesehen, mittels derer die entsprechenden Stecker an der ersten Aufnahmeeinheit 14 anbringbar sind. Hierbei entsprechen die verschiedenen Gruppen von Löchern 14a bis 14c verschiedenen Typen von Steckern, die einen unterschiedlichen Steckhub aufweisen. Ebenfalls ist deutlich, dass durch das Vorsehen der mehreren Gruppen 14a bis 14c von Löchern mehrere Stecker gleichzeitig ein- und ausgesteckt werden können.

Fest mit dem Grundkörper 12 verbunden liegt der ersten Aufnahmeeinheit 14 eine zweite Aufnahmeeinheit 18 gegenüber, in der ebenfalls entsprechende Lochgruppen 18a bis 18c zum Aufnehmen der fahrzeugseitigen Steckereinheit vorgesehen sind. Weiterhin ist in Figur 1 ein an dem Grundkörper 12 angelenkter Betätigungshebel 20 gezeigt, der um eine Achse A1 schwenkbar gelagert ist.

Ferner ist in Figur 1 ein um eine Achse A2 an dem Betätigungshebel 20 schwenkbar angelenktes Mitnehmerelement 22 zu erkennen, das sich von seinem an dem Betätigungshebel 20 angelenkten ersten Ende 22a zu seinem zweiten Ende 22b bogenförmig erstreckt und durch einen an dem zweiten Ende 22b vorgesehenen Nocken 23 in einem Langloch 24 in der Seitenwand 12a des Grundkörpers 12 geführt ist. Es sei darauf hingewiesen, dass aufgrund der Symmetrie des Systems um die Achse L insgesamt zwei Mitnehmerelemente 22 vorgesehen sind, von denen eines allerdings in Fig.1 größtenteils verdeckt ist. Zum Führen der Mitnehmerelemente 22 an dem Grundkörper 12 erstrecken sich die bereits angesprochenen Nocken 23 als Gegenelemente der Mitnehmerelemente 22 durch die Langlöcher 24 von außen nach innen in Richtung der Mittelebene des Systems 10 durch das jeweiligen Langloch 24 in der Seitenwand 12a des Grundkörpers 12 hindurch.

Zuletzt sei noch auf den Anschlag 26a hingewiesen, auf dem der Betätigungshebel 20 in der in Figur 1 gezeigten Stellung aufliegt, und der im Wesentlichen eine Verlängerung der zweiten Aufnahmeeinheit darstellt. Wie weiter unten ebenfalls noch angesprochen werden wird, ist ferner benachbart zu diesem Anschlag 26a ein Verriegelungselement 26b zum Festsetzen des Betätigungshebels 20 in dessen entgegengesetzter Endstellung vorgesehen, das als elastisch biegsamer Blechabschnitt ausgeführt ist.

Die Figuren 2a bis 2c zeigen nun einen Einsteckvorgang einer batterieseitigen Steckereinheit in eine fahrzeugseitige Steckereinheit mithilfe des Batteriestecker-Betätigungssystems aus Figur 1, das in diesen Figuren in einer Querschnittsansicht entlang der in Längsrichtung L verlaufenden Mittelebene des Systems 10 dargestellt ist.

Hierbei ist zunächst zu erkennen, dass die erste Aufnahmeeinheit 14 innerhalb und parallel zu den Seitenwänden 12a des Grundkörpers 12 eine Verlängerung 15 aufweist, die in einer Hakeneinheit 15a endet. Diese Hakeneinheit 15a erstreckt in dem in Figur 2a gezeigten Zustand bis in den Bereich des zweiten Langlochs 24, in dem der am zweiten Ende 22b des Mitnehmerelements 22 vorgesehene Nocken 23 aufgenommen ist und sich durch dieses hindurch erstreckt.

In dem in Figur 2a gezeigten Zustand des Batteriestecker-Betätigungssystems 10, das einem ausgesteckten Zustand der nicht gezeigten batterieseitigen Steckereinheit entspricht, liegt noch kein Eingriff zwischen dem Hakenelement 15a und dem Nocken 23 vor, so dass ein Einschieben der ersten Aufnahmeeinheit 14 in der Einsteckrichtung so weit möglich ist, bis der Verlängerungsabschnitt 15 der ersten Aufnahmeeinheit in Kontakt mit dem Nocken 23 kommt. Dieser Zustand entspricht ferner einem Zustand der beiden Steckereinheiten, in dem diese bereits in Kontakt sind, jedoch die batterieseitige Steckereinheit noch nicht fest in die fahrzeugseitige Steckereinheit eingesteckt ist, wobei anschließend der Steckwiderstand der beiden Steckereinheiten durch die Hebelwirkung des Betätigungshebels 20 überwunden werden kann. Weiterhin ist in Figur 2a zu sehen, dass der Vorsprung 20a am unteren Ende des Betätigungshebels zusammen mit dem Blechabschnitt 26b, der in dem Bereich, in dem er mit dem Betätigungshebel 20 in Kontakt ist, elastisch verformbar ist, zum Festsetzen des Betätigungshebels 20 in dieser festgelegten Endposition wirkt und somit ein erfindungsgemäßes Verriegelungselement darstellt.

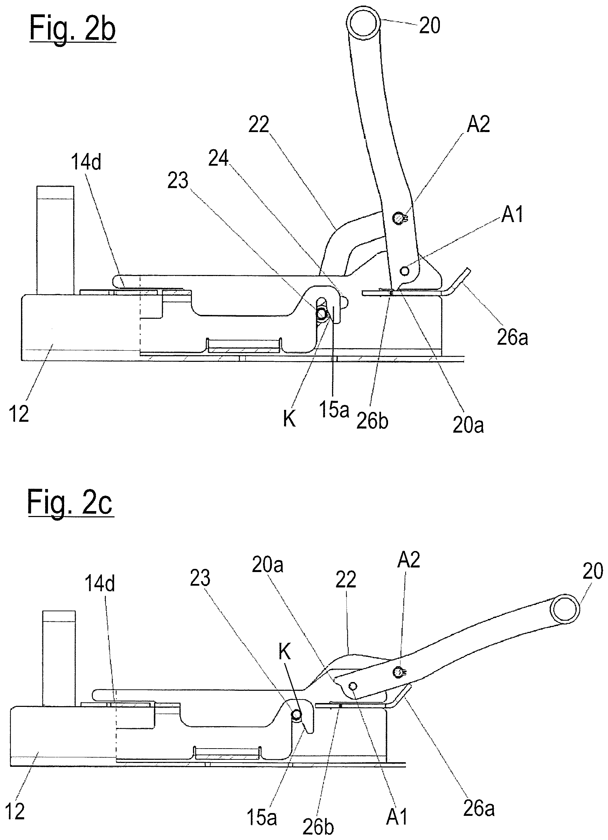

Nachdem bei einer Betätigung des Betätigungshebels 20, d. h. einem Schließen des Hebels 20 in Schließrichtung nach rechts, zunächst einmal der Widerstand des Verriegelungselements 26b überwunden worden ist, kann dieser in die in Figur 2b gezeigte Zwischenposition übergehen, wobei in dieser Figur ebenfalls zu erkennen ist, dass mittlerweile der an dem Mitnehmerelement 22 vorgesehene Nocken 23 das Langloch 24 in etwa zur Hälfte durchlaufen hat und hierbei mit dem Haken 15a der ersten Aufnahmeeinheit 14 in Eingriff gekommen ist. Der Eingriffspunkt zwischen dem Mitnehmerelement 22 und der ersten Aufnahmeeinheit 14 entspricht dem erfindungsgemäßen Kraftübertragungspunkt K. Auf diese Weise zieht der Betätigungshebel 20 über Vermittlung durch das Mitnehmerelement 22, den daran vorgesehenen Nocken 23 und das Hakenelement 15a die erste Aufnahmeeinheit 14 in Richtung der zweiten Aufnahmeeinheit 18, so dass ein Einstecken der batterieseitigen Steckereinheit in die fahrzeugseitige Steckereinheit bewirkt wird.

Am Ende dieser Einsteckbewegung befindet sich der Betätigungshebel 20 schließlich in der in Figur 2c gezeigten Position, in der er gegen das Anlageelement 26a anliegt, wodurch eine Endstellung des Hebels 20 in dieser eingesteckten Position der beiden Steckereinheiten festgelegt ist.

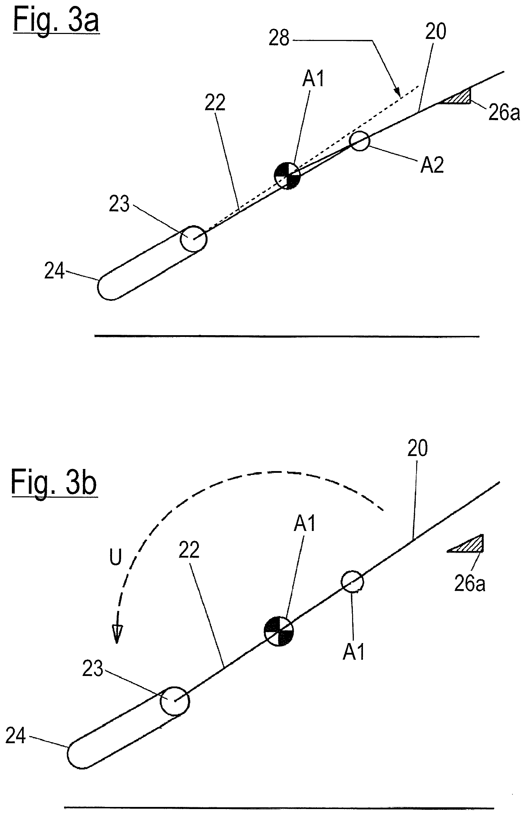

In den Figuren 3a bis 3d ist nun schließlich ein Aussteckvorgang des Batteriestecker-Betätigungssystems 10 schematisch dargestellt, um die Kinematik des zugrundeliegenden Mechanismus zu verdeutlichen. Es sei hierbei darauf hingewiesen, dass zur Verdeutlichung das Mitnehmerelement 22 durch eine Gerade dargestellt ist, während es in den Figuren 1 und 2 gebogen dargestellt ist.

Wie sich aus dem Übergang von der Figur 3a zu der Figur 3b ergibt, muss bei einem Aussteckvorgang des Batteriestecker-Betätigungssystems 10 zunächst einmal ein Totbereich des Betätigungshebels 20 überwunden werden, der in Figur 3a durch eine gestrichelte Linie 28 veranschaulicht ist. Erst nachdem der Betätigungshebel 20 diese Totlage 28 bei einer Bewegung dem Pfeil U aus Figur 3b folgend überwunden hat, in der der Nocken 23, die erste Achse A1 und die zweite Achse A2 genau auf einer Geraden liegen, wird eine Bewegung des Nockens 23 in dem Langloch 24 ausgelöst.

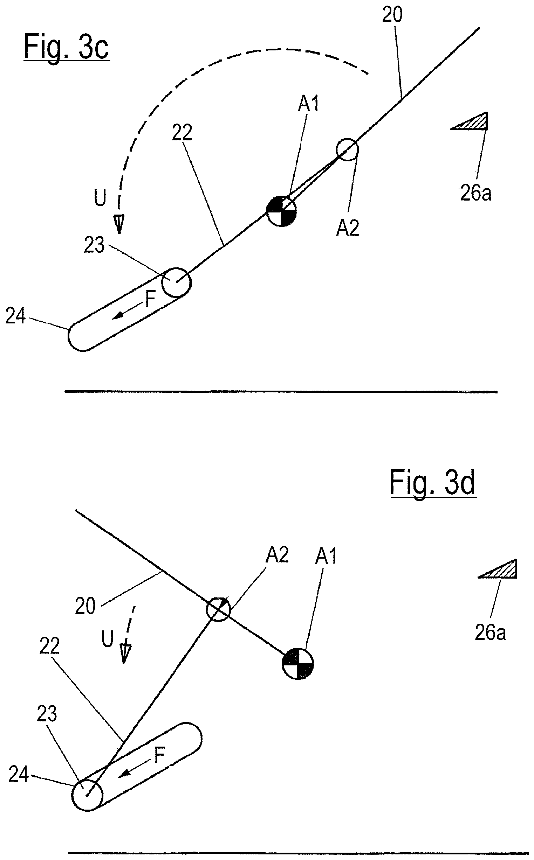

Diese Bewegung ist insbesondere in Figur 3c dargestellt und durch den Pfeil F angedeutet. In dieser Figur 3c ist ferner die Totlage 28 gerade überwunden ist, so dass sich der Nocken 23 gerade in Richtung F in dem Langloch 24 in Bewegung setzt. Schließlich stößt der Nocken 23, wie in Figur 3d gezeigt, am entgegengesetzten Ende des Langlochs 24 an, wodurch eine Endposition des Hebels 20 festgelegt ist, die derjenigen aus der Ansicht aus Figur 2b entspricht und die eine Bereitschaftsposition des Systems 10 darstellt, von welcher aus ein erneuter Einsteckvorgang begonnen werden kann.

## Patentansprüche

1. Batteriestecker-Betätigungssystem zum Herstellen und Lösen einer Steckverbindung wenigstens einer batterieseitigen Steckereinheit und wenigstens einer fahrzeugseitigen Steckereinheit in einem Fahrzeug, insbesondere einem Flurförderzeug, umfassend:
- einen Grundkörper (12);
- eine an dem Grundkörper (12) in einer Einsteck- und Aussteckrichtung (L) verlagerbar geführte erste Aufnahmeeinheit (14) für die wenigstens eine batterieseitige Steckereinheit;
- eine dem Grundkörper fest zugeordnete zweite Aufnahmeeinheit (18) für die wenigstens eine fahrzeugseitige Steckereinheit;
- einen schwenkbar an dem Grundkörper angelenkten Betätigungshebel (20); und
- wenigstens ein Mitnehmerelement (22), welches einerseits an dem Betätigungshebel (20) angelenkt ist und andererseits verlagerbar an dem Grundkörper (12) geführt ist;
wobei die erste Aufnahmeeinheit (14) und das Mitnehmerelement (22) derart eingerichtet sind, dass bei einem Schwenken des Betätigungshebels (20) an einem Kraftübertragungspunkt (K) eine Kraft von dem Mitnehmerelement (22) auf die erste Aufnahmeeinheit (14) übertragen wird, welche eine Verlagerung der ersten Aufnahmeeinheit (14) in die Einsteck- oder Aussteckrichtung (L) bewirkt;
**dadurch gekennzeichnet, dass** der Kraftübertragungspunkt (K) zwischen dem Mitnehmerelement (22) und der ersten Aufnahmeeinheit (14) in Einsteckrichtung (L) der batterieseitigen Steckereinheit hinter dem Steckverbindungspunkt der beiden Steckereinheiten liegt, wobei die erste Aufnahmeeinheit (14) an ihrer in Einsteckrichtung (L) vorderen Seite wenigstens ein Hakenelement (15a) aufweist, welches dazu eingerichtet ist, mit einem Gegenelement (23) des Mitnehmerelements (22) in Eingriff zu treten, wobei der Eingriff lediglich in einem vorbestimmten Schwenkwinkelbereich des Betätigungshebels (20) vorliegt.

2. Batteriestecker-Betätigungssystem nach Anspruch 1, wobei die erste und die zweite Aufnahmeeinheit (14, 18) jeweils dazu eingerichtet sind, wenigstens zwei Typen von Steckereinheiten aufnehmen zu können und/oder gleichzeitig wenigstens zwei Steckereinheiten aufnehmen zu können.

3. Batteriestecker-Betätigungssystem nach einem der vorhergehenden Ansprüche, wobei die erste und die zweite Aufnahmeeinheit (14, 18) jeweils wenigstens eine Gruppe von Löchern (14a-14c, 18a-18c) zur Aufnahme wenigstens einer Steckereinheit umfassen.

4. Batteriestecker-Betätigungssystem nach einem der vorhergehenden Ansprüche, wobei die Führung der ersten Aufnahmeeinheit (14) an dem Grundkörper (12) und/oder die Führung des wenigstens einen Mitnehmerelements (22) an dem Grundkörper (12) mittel wenigstens eines Langlochs (16, 24) vorgesehen ist.

5. Batteriestecker-Betätigungssystem nach einem der vorhergehenden Ansprüche, wobei die Anlenkachse des Betätigungshebels an dem Grundkörper in Einsteckrichtung der batterieseitigen Steckereinheit hinter dem Kraftübertragungspunkt zwischen dem Mitnehmerelement (22) und der ersten Aufnahmeeinheit (14) liegt.

6. Batteriestecker-Betätigungssystem nach einem der vorhergehenden Ansprüche, wobei die erste Aufnahmeeinheit (14) von dem Grundkörper (12) lösbar ist, beispielsweise indem das zu ihrer Führung vorgesehene Langloch (16) an dem Grundkörper (12) an einer Seite offen ausgebildet ist.

7. Batteriestecker-Betätigungssystem nach einem der vorhergehenden Ansprüche, wobei es bezüglich einer in Einsteck- und Aussteckrichtung (L) verlaufenden Mittelebene im Wesentlichen symmetrisch ausgebildet ist.

8. Batteriestecker-Betätigungssystem nach einem der vorhergehenden Ansprüche, wobei die Schwenkachse (A1) des Betätigungshebels (20) an dem Grundkörper (12), die Anlenkachse (A2) des Mitnehmerelements (22) an dem Betätigungshebel (20) und die Führung des Mitnehmerelements (22) an dem Grundkörper (12) dazu eingerichtet sind, derart zusammenzuwirken, dass eine Verlagerung des Mitnehmerelements (22) in seiner Führung bei einem Schwenken des Betätigungshebels (20) erst nach Überschreiten eines Totbereichs (28) einsetzt.

9. Batteriestecker-Betätigungssystem nach einem der vorhergehenden Ansprüche, dadurch wobei ein es ferner ein Anschlagselement (26a) zum Begrenzen der Schwenkbewegung des Betätigungshebels (20) in der Einsteckrichtung umfasst.

10. Batteriestecker-Betätigungssystem nach einem der vorhergehenden Ansprüche, wobei es ferner ein Verriegelungselement (26b) zum Festsetzen des Betätigungshebels (20) in einer festgelegten Endposition in der Aussteckrichtung umfasst, wobei die Endposition beispielsweise durch die Führung des Mitnehmerelements (22) an dem Grundkörper (12) festgelegt sein kann.

11. Fahrzeug, insbesondere Flurförderzeug, umfassend ein Batteriestecker-Betätigungssystem nach einem der vorhergehenden Ansprüche.

## Claims

1. Battery connector actuation system for establishing and releasing an insertion connection of at least one battery-side connector unit and at least one vehicle-side connector unit in a vehicle, in particular an industrial truck, comprising:
- a main body (12);
- a first receiving unit (14) for the at least one battery-side connector unit, which is movably guided on the main body (12) in an insertion and removal direction (L);
- a second receiving unit (18) for the at least one vehicle-side connector unit, which is fixedly associated with the main body;
- an actuating lever (20) which is pivotably articulated on the main body; and
- at least one driver element (22) which is articulated to the actuating lever (20) on one side and is movably guided on the main body (12) on the other side;
wherein the first receiving unit (14) and the driver element (22) are designed in such a way that when the actuating lever (20) is pivoted at a force transmission point (K), a force is transmitted from the driver element (22) to the first receiving unit (14), which causes a movement of the first receiving unit (14) in the insertion or removal direction (L);
**characterised in that** the force transmission point (K) between the driver element (22) and the first receiving unit (14) in the insertion direction (L) of the battery-side connector unit is located behind the insertion connection point of the two connector units, the first receiving unit (14) having at least one hook element (15a) on the front face thereof in the insertion direction (L), which hook element is designed to engage with a counter element (23) of the driver element (22), the engagement only being present in a predetermined pivot angle range of the actuating lever (20).

2. Battery connector actuation system according to claim 1, wherein the first and the second receiving unit (14, 18) are each designed to be able to receive at least two types of connector units and/or to be able to receive at least two connector units at the same time.

3. Battery connector actuation system according to either of the preceding claims, wherein the first and the second receiving unit (14, 18) each comprise at least one group of holes (14a-14c, 18a-18c) for receiving at least one connector unit.

4. Battery connector actuation system according to any of the preceding claims, wherein the guide of the first receiving unit (14) on the main body (12) and/or the guide of the at least one driver element (22) on the main body (12) is provided by means of at least one elongate hole (16, 24).

5. Battery connector actuation system according to any of the preceding claims, wherein the articulation axis of the actuation lever on the main body is located behind the force transmission point between the driver element (22) and the first receiving unit (14) in the insertion direction of the battery-side connector unit.

6. Battery connector actuation system according to any of the preceding claims, wherein the first receiving unit (14) is detachable from the main body (12), for example by the elongate hole (16) provided for the guidance thereof on the main body (12) being open on one side.

7. Battery connector actuation system according to any of the preceding claims, wherein it is designed to be substantially symmetrical with respect to a central plane extending in the insertion and removal direction (L).

8. Battery connector actuation system according to any of the preceding claims, wherein the pivot axis (A1) of the actuation lever (20) on the main body (12), the articulation axis (A2) of the driver element (22) on the operating lever (20) and the guide of the driver element (22) on the main body (12) are designed to interact in such a way that a movement of the driver element (22) in the guide thereof when the actuating lever (20) is pivoted only begins after a dead zone (28) has been exceeded.

9. Battery connector actuation system according to any of the preceding claims, in that wherein a it further comprises a stop element (26a) for limiting the pivoting movement of the actuation lever (20) in the insertion direction.

10. Battery connector actuation system according to any of the preceding claims, wherein it further comprises a locking element (26b) for fixing the actuating lever (20) in a fixed end position in the removal direction, wherein the end position can be set by the guide of the driver element (22) on the main body (12), for example.

11. Vehicle, in particular an industrial truck, comprising a battery connector actuation system according to any of the preceding claims.

## Revendications

1. Système d'actionnement d'un connecteur de batterie pour réaliser et libérer une connexion par connecteur d'au moins une unité de connecteur côté batterie et d'au moins une unité de connecteur côté véhicule dans un véhicule, en particulier un chariot de manutention, comprenant :
- un corps de base (12) ;
- une première unité de réception (14), guidée de manière mobile sur le corps de base (12) dans une direction d'insertion et de retrait (L), pour ladite au moins une unité de connecteur côté battérie,
- une deuxième unité de réception (18), associée de manière fixe au corps de base, pour ladite au moins une unité de connecteur côté véhicule ;
- un levier d'actionnement (20) articulé de manière pivotante sur le corps de base ; et
- au moins un élément d'entraîneur (22) qui, d'une part, est articulé sur le levier d'actionnement (20) et, d'autre part, est guidé de manière mobile sur le corps de base (12) ;
dans lequel la première unité de réception (14) et l'élément d'entraîneur (22) sont agencés de telle sorte que, lors d'un pivotement du levier d'actionnement (20) en un point de transmission de force (K), une force est transmise de l'élément d'entraîneur (22) à la première unité de réception (14), laquelle force provoque un déplacement de la première unité de réception (14) dans la direction d'insertion ou de retrait (L) ;
**caractérisé en ce que** le point de transmission de force (K) entre l'élément d'entraîneur (22) et la première unité de réception (14) se trouve dans la direction d'insertion (L) de l'unité de connecteur côté batterie derrière le point de connexion par connecteur des deux unités de connecteur, dans lequel la première unité de réception (14) présente sur sa face avant dans le sens d'insertion (L) au moins un élément de crochet (15a), qui est adapté pour s'engager avec un contre-élément (23) de l'élément d'entraîneur (22), dans lequel l'engagement n'est réalisé que dans une plage d'angle de pivotement prédéterminée du levier d'actionnement (20).

2. Système d'actionnement de connecteur de batterie selon la revendication 1, dans lequel
lesdites premières et deuxièmes unités de réception (14, 18) sont chacune adaptées pour pouvoir recevoir au moins deux types d'unités de connecteur et/ou pour pouvoir recevoir simultanément au moins deux unités de connecteur.

3. Système d'actionnement de connecteur de batterie selon l'une des revendications précédentes, dans lequel
lesdites premières et deuxièmes unités de réception (14, 18) comprennent chacune au moins un groupe de trous (14a-14c, 18a-18c) pour recevoir au moins une unité de connecteur.

4. Système d'actionnement de connecteur de batterie selon l'une des revendications précédentes, dans lequel
le guidage de la première unité de réception (14) sur le corps de base (12) et/ou le guidage dudit au moins un élément d'entraîneur (22) sur le corps de base (12) est assuré au moyen d'au moins un trou allongé (16, 24).

5. Système d'actionnement de connecteur de batterie selon l'une des revendications précédentes, dans lequel
l'axe d'articulation du levier d'actionnement sur le corps de base se trouve dans la direction d'insertion de l'unité de connecteur côté batterie derrière le point de transmission de force entre l'élément d'entraîneur (22) et la première unité de réception (14).

6. Système d'actionnement de connecteur de batterie selon l'une des revendications précédentes, dans lequel
la première unité de réception (14) est détachable du corps de base (12), par exemple par le fait que le trou allongé (16) prévu pour son guidage est formé sur le corps de base (12) ouvert d'un côté.

7. Système d'actionnement de connecteur de batterie selon l'une des revendications précédentes, dans lequel
il est formé de manière sensiblement symétrique par rapport à un plan central s'étendant dans la direction d'insertion et de retrait (L).

8. Système d'actionnement de connecteur de batterie selon l'une des revendications précédentes, dans lequel
l'axe de pivotement (A1) du levier d'actionnement (20) sur le corps de base (12), l'axe d'articulation (A2) de l'élément d'entraîneur (22) sur le levier d'actionnement (20) et le guidage de l'élément d'entraîneur (22) sur le corps de base (12) sont adaptés pour coopérer de telle sorte qu'un déplacement de l'élément d'entraîneur (22) dans son guidage lors d'un pivotement du levier d'actionnement (20) ne commence qu'après le dépassement d'une zone morte (28).

9. Système d'actionnement de connecteur de batterie selon l'une des revendications précédentes,
comprenant en outre un élément de butée (26a) pour limiter le mouvement de pivotement du levier d'actionnement (20) dans la direction d'insertion.

10. Système d'actionnement de connecteur de batterie selon l'une des revendications précédentes,
comprenant en outre un élément de verrouillage (26b) pour verrouiller le levier d'actionnement (20) dans une position finale fixe dans la direction de retrait, dans lequel la position finale peut être fixée, par exemple, par le guidage de l'élément d'entraîneur (22) sur le corps de base (12).

11. Véhicule, en particulier chariot de manutention, comportant un système d'actionnement de connecteur de batterie selon l'une des revendications précédentes.
